# EUROPÄISCHE PATENTSCHRIFT

(11) **EP 2 092 108 B1**
(45) Veröffentlichungstag und Bekanntmachung des Hinweises auf die Patenterteilung: **24.03.2010**
(21) Anmeldenummer: 07821740.3
(22) Anmeldetag: 24.10.2007
(51) Int. Cl.: D06F 58/28

(54) **VERFAHREN ZUM BETREIBEN EINES HAUSGERÄTS ZUR PFLEGE VON WÄSCHESTÜCKEN**
METHOD FOR THE OPERATION OF A HOUSEHOLD APPLIANCE USED FOR TAKING CARE OF LAUNDRY
PROCÉDÉ POUR FAIRE FONCTIONNER UN APPAREIL ÉLECTROMÉNAGER DESTINÉ À L'ENTRETIEN DU LINGE

(30) Priorität: 31.10.2006 DE 102006051504
(43) Veröffentlichungstag der Anmeldung: 26.08.2009
(73) Patentinhaber: BSH Bosch und Siemens Hausgeräte GmbH, 81739 München (DE)
(72) Erfinder: GRUNERT, Klaus, 13465 Berlin (DE); STEFFENS, Günter, 14624 Dallgow-Döberitz (DE); STOLZE, Andreas, 14612 Falkensee (DE)
(86) Internationale Anmeldenummer: PCT/EP2007/061377
(87) Internationale Veröffentlichungsnummer: WO 2008/052914

(56) Entgegenhaltungen:
- DE-A1- 1 410 206
- DE-A1- 1 817 058
- DE-A1- 1 922 705
- DE-U- 6 926 182

## Beschreibung

Die Erfindung betrifft ein Verfahren zum Betreiben eines Hausgeräts zur Pflege von Wäschestücken, bei welchem zum Trocknen der Wäschestücke eine Peltier-Wärmepumpe des Hausgeräts aktiviert und elektrisch mit Energie versorgt wird.

Ein Verfahren der eingangs genannten Gattung geht hervor aus der DE 14 10 206 A.

Ein Wäschetrockner, welcher eine Peltier-Wärmepumpe aufweist, ist beispielsweise aus der DE 69 261 82 U1 bekannt.

Aus der DE 18 17 058 A gehen eine Peltier-Wärmepumpe sowie eine Schaltung zu deren Steuerung oder Regelung hervor.

Abhängig von dem zur Verfügung stehenden Bauraum in einem Wäschetrockner, dem realisierbaren Luftvolumenstrom und der elektrischen Anschlussleistung der Peltier-Wärmepumpe sind die realisierbaren Trocknungszeiten in einem solchen Wäschetrockner üblicherweise recht lang. Eine Verkürzung der Trocknungszeit ist durch eine Verbesserung des Pumpfaktors der Wärmepumpe und eine Verkürzung der Aufheizphase des Wäschetrockners möglich. Dieses Verbesserungskriterium bezieht sich auf eine hohe Prozesstemperatur bei kleiner Anschlussleistung. Eine größere elektrische Anschlussleistung der Peltier-Wärmepumpe führt zwar zu einer etwas verkürzten Trocknungszeit, aber das Energieziel ist durch den schlechteren Wirkungsgrad beim Betrieb dieser Peltier-Wärmepumpe nicht mehr erreichbar.

Es ist ein Wäschetrockner mit Peltier-Wärmepumpe bekannt, welcher aufgrund einer relativ geringen Anschlussleistung der Peltier-Elemente dieser Wärmepumpe von etwa 600 W bis etwa 1200 W und einer Pumpleistung von etwa 350 W bis 700 W eine relativ lange Aufheizphase und Trocknungsphase hat.

Daher ist es Aufgabe der vorliegenden Erfindung, ein Verfahren zu schaffen, mit dem ein Hausgerät zur Pflege von Wäschestücken so betrieben werden kann, dass die Trocknungszeit verkürzt werden kann.

Diese Aufgabe wird durch ein Verfahren, welches die Merkmale nach Patentanspruch 1 aufweist, gelöst.

Gemäß der Erfindung wird eine Peltier-Wärmepumpe eines Hausgeräts zur Pflege von Wäschestücken zum Trocknen der Wäschestücke aktiviert und elektrisch mit Energie versorgt. Die Energieversorgung der Peltier-Wärmepumpe während des Trocknungsprozesses wird abhängig von einer erreichten Prozessphase variiert, wobei die elektrische Leistung der Peltier-Wärmepumpe während einer Aufheizphase des Trocknungsprozesses des Hausgeräts höher eingestellt wird als während einer auf die Aufheizphase folgenden Trocknungsphase. Durch dieses Verändern der Einstellung der Energieversorgung kann in optimaler Weise die Energieversorgung der Peltier-Wärmepumpe und somit auch des Hausgeräts dahingehend gesteuert werden, dass der Trocknungsprozess verkürzt wird. Durch diese Optimierung kann auch der Energieverbrauch des Hausgeräts reduziert werden.

Die Energieversorgung, insbesondere die elektrische Leistung der Peltier-Wärmepumpe, wird während einer Aufheizphase des Trocknungsprozesses des Hausgeräts auf ein höheres Leistungsniveau eingestellt als während einer auf die Aufheizphase folgende Trocknungsphase des Trocknungsprozesses. Der Trocknungsprozess umfasst im Wesentlichen in zeitlicher Abfolge die Aufheizphase, die Trocknungsphase und die Endphase. Insbesondere durch die Verkürzung der Aufheizphase, welche durch eine Erhöhung der elektrischen Anschlussleistung gewährleistet werden kann, kann auch die Trocknungszeit der Wäschestücke reduziert werden. Darüber hinaus kann durch eine derartige Verkürzung der Aufheizphase die Peltier-Wärmepumpe für die verbleibende Zeitdauer des Trocknungsprozesses länger im Betriebsoptimum betrieben werden.

In diesem Zusammenhang ist es wichtig zu beachten, dass die Auslegung (einschließlich Festlegung eines Nennwertes der Leistungsaufnahme) einer Peltier-Wärmepumpe in erster Linie für denjenigen Betriebszustand erfolgt, in welchem sich die Wärmepumpe am meisten befindet. Entsprechend ist dieser Betriebszustand ein der Trocknungsphase, nicht der Aufheizphase entsprechender Betriebszustand. Entsprechend umfasst die Erfindung einen Betrieb der Peltier-Wärmepumpe mit einer Leistungsaufnahme oberhalb des auslegungsgemäßen Nennwertes in der Aufheizphase.

Bevorzugt wird für eine vorgebbare Zeitdauer eine erhöhte elektrische Leistung eingestellt und/oder eine erhöhte elektrische Leistung bis zum Erreichen eines vorgebbaren Temperaturschwellwerts im Hausgerät eingestellt.

Bevorzugt wird die Peltier-Wärmepumpe zum Beginn des Trocknungsprozesses zeitbegrenzt oder temperaturgeregelt mit einer höheren Spannung bzw. mit einer höheren Strombegrenzung angesteuert. Die dann höhere elektrische Anschlussleistung der Peltier-Wärmepumpe heizt das Hausgerät und die Wäschestücke schneller auf und bringt die Peltier-Wärmepumpe beim anschließenden Herunterschalten durch die hohe Prozesslufttemperatur in das Betriebsoptimum. Dabei wird besonders bevorzugt für eine vorgebbare Zeitdauer eine erhöhte Leistung und/oder eine erhöhte Leistung bis zum Erreichen eines vorgebbaren Temperatur-Schwellwerts im Hausgerät eingestellt.

Bevorzugt wird die elektrische Leistung der Peltier-Wärmepumpe während einer auf die Trocknungsphase folgenden Endphase des Trocknungsprozesses des Hausgeräts kleiner eingestellt als während der vorhergehenden Trocknungsphase. Auch dadurch kann das Energiemanagement des Hausgeräts nochmals verbessert werden.

Bevorzugt wird in der Endphase für eine vorgebbare Zeitdauer eine kleinere Leistung eingestellt und/oder eine kleinere elektrische Leistung bis zum Erreichen eines vorgebbaren Temperatur-Schwellwerts im Hausgerät eingestellt. Auch kann anstatt oder zusätzlich auch eine kleinere elektrische Leistung bis zum Erreichen eines vorgebbaren Feuchte-Schwellwerts der Prozessluft eingestellt werden. Es sind somit eine Mehrzahl an Kriterien vorgebbar, anhand dieser entschieden wird, ob eine Reduzierung der elektrischen Leistung bzw. wann eine Reduzierung dieser elektrischen Leistung erfolgen kann. Es wird somit zum Ende des Trocknungsprozesses bevorzugt die elektrische Anschlussleistung der Peltier-Wärmepumpe durch Reduzierung der elektrischen Spannung bzw. des elektrischen Stroms aufgrund einer beispielsweise geringeren Feuchtebeladung der Prozessluft zeitgesteuert und/oder temperaturgeregelt und/oder feuchtegesteuert verringert.

Ein Ausführungsbeispiel der Erfindung wird nachfolgend näher erläutert.

Bei dem mit einer Peltier-Wärmepumpe ausgebildeten Wäschetrockner wird die elektrische Anschlussleistung während des Trocknungsprozesses und insbesondere während der Aufheizphase variiert. Solches Variieren erfolgt insbesondere durch Ändern einer über der Peltier-Wärmepumpe anstehenden elektrischen Spannung und/oder durch Einstellen eines die Peltier-Wärmepumpe durchfließenden elektrischen Stromes. Während der Aufheizphase ist vorgesehen, dass diese elektrische Anschlussleistung der Peltier-Wärmepumpe höher eingestellt wird, als während der Trocknungsphase. Insbesondere kann dabei die elektrische Spannung oder der elektrische Strom entsprechend variiert und während der Aufheizphase im Vergleich zur Trocknungsphase erhöht werden. Des Weiteren wird während der Endphase, in der die Wäsche trocken ist, die elektrische Anschlussleistung und somit insbesondere die elektrische Spannung oder der elektrische Strom im Vergleich zum eingestellten Wert während der Trocknungsphase reduziert.

## Patentansprüche

1. Verfahren zum Betreiben eines Hausgeräts zur Pflege von Wäschestücken, bei welchem zum Trocknen der Wäschestücke eine Peltier-Wärmepumpe des Hausgeräts aktiviert und elektrisch mit Energie versorgt wird, **dadurch gekennzeichnet, dass** die Energieversorgung der Peltier-Wärmepumpe während des Trocknungsprozesses abhängig von einer erreichten Prozessphase variiert wird, wobei die elektrische Leistung der Peltier-Wärmepumpe während einer Aufheizphase des Trocknungsprozesses des Hausgeräts höher eingestellt wird als während einer auf die Aufheizphase folgenden Trocknungsphase.

2. Verfahren nach Anspruch 1, **dadurch gekennzeichnet, dass** die Peltier-Wärmepumpe ausgelegt ist für einen Betriebszustand, in welchem sie eine Leistungsaufnahme in Höhe eines Nennwertes hat, dass die Peltier-Wärmepumpe während der Aufheizphase mit einer gegenüber dem Nennwert erhöhten Leistung betrieben wird, und dass die Peltier-Wärmepumpe während einer an die Aufheizphase anschließenden Trocknungsphase bei einer dem Nennwert entsprechenden Leistung betrieben wird.

3. Verfahren nach Anspruch 2, **dadurch gekennzeichnet, dass** während der Aufheizphase für eine vorgebbare Zeitdauer eine erhöhte Leistung eingestellt wird und/oder eine erhöhte Leistung bis zum Erreichen eines vorgebbaren Temperatur-Schwellwerts im Hausgerät eingestellt wird.

4. Verfahren nach einem der vorhergehenden Ansprüche, **dadurch gekennzeichnet, dass** die elektrische Leistung der Peltier-Wärmepumpe während einer auf die Trocknungsphase folgenden Endphase des Trocknungsprozesses des Hausgeräts kleiner eingestellt als während der Trocknungsphase.

5. Verfahren nach Anspruch 4, **dadurch gekennzeichnet, dass** für eine vorgebbare Zeitdauer eine kleinere Leistung eingestellt wird und/oder eine kleinere Leistung bis zum Erreichen eines vorgebbaren Temperatur-Schwellwerts im Hausgerät eingestellt wird und/oder eine kleinere Leistung bis zum Erreichen eines vorgebbaren Feuchte-Schwellwerts der Prozessluft eingestellt wird.

6. Verfahren nach einem der Ansprüche 2 bis 5, **dadurch gekennzeichnet, dass** zur Veränderung der Energieversorgung die elektrische Spannung oder der elektrische Strom entsprechend variiert werden.

## Claims

1. Method of operating a domestic appliance for care of items of laundry, in which, for drying the items of laundry, a Peltier heat pump of the domestic appliance is activated and electrically supplied with energy, **characterised in that** the energy supply of the Peltier heat pump is varied during the drying process in dependence on an attained process phase, wherein the electrical power of the Peltier heat pump is set to be higher during a heating-up phase of the drying process of the domestic appliance than during a drying phase following the heating-up phase.

2. Method according to claim 1, **characterised in that** the Peltier heat pump is designed for an operational state in which it has a power consumption at the level of a rated value, that the Peltier heat pump is operated during the heating-up phase with a power increased relative to the rated value and that the Peltier heat pump is operated at a power corresponding with the rated value during a drying phase succeeding the heating-up phase.

3. Method according to claim 2, **characterised in that** during the heating-up phase an increased power is set for a predeterminable period of time and/or an increased power is set until attainment of a predeterminable temperature threshold value in the domestic appliance.

4. Method according to any one of the preceding claims, **characterised in that** the electrical power of the Peltier heat pump is set to be smaller during an end phase, which follows the drying phase, of the drying process of the domestic appliance than during the drying phase.

5. Method according to claim 4, **characterised in that** a lower power is set for a predeterminable period of time and/or a lower power is set until attainment of a predeterminable target threshold value in the domestic appliance and/or a lower power is set until attainment of the predeterminable moisture threshold value of the process air.

6. Method according to any one of claims 2 to 5, **characterised in that** for change in the energy supply the electrical voltage or the electrical current is correspondingly varied.

## Revendications

1. Procédé d'exploitation d'un appareil ménager pour l'entretien de linge, dans lequel une pompe à chaleur Peltier de l'appareil ménager est activée et alimentée électriquement en énergie pour le séchage du linge, **caractérisé en ce que** l'alimentation en énergie de la pompe à chaleur Peltier durant le processus de séchage est modifiée en fonction de l'atteinte d'une phase de processus, la puissance électrique de la pompe à chaleur Peltier étant réglée à un niveau plus important durant une phase d'échauffement du processus de séchage de l'appareil ménager que durant une phase de séchage consécutive à la phase d'échauffement.

2. Procédé selon la revendication 1, **caractérisé en ce que** la pompe à chaleur Peltier est dimensionnée pour un état de fonctionnement dans lequel elle a une puissance absorbée à concurrence d'une valeur nominale, **en ce que** la pompe à chaleur Peltier est exploitée selon une puissance accrue par rapport à la valeur nominale durant la phase d'échauffement, et **en ce que** la pompe à chaleur Peltier est exploitée selon une puissance correspondant à la valeur nominale durant une phase de séchage consécutive à la phase d'échauffement.

3. Procédé selon la revendication 2, **caractérisé en ce qu'**une puissance accrue est réglée pour une durée prédéterminable durant la phase d'échauffement et/ou une puissance accrue est réglée jusqu'à l'atteinte d'une valeur seuil de température prédéterminable dans l'appareil ménager.

4. Procédé selon l'une des revendications précédentes, **caractérisé en ce que** la puissance électrique de la pompe à chaleur Peltier est réglée à un niveau moins important durant une phase finale du processus de séchage de l'appareil ménager consécutive à la phase de séchage que durant la phase de séchage.

5. Procédé selon la revendication 4, **caractérisé en ce qu'**une puissance moindre est réglée pour une durée prédéterminable et/ou une puissance moindre est réglée jusqu'à l'atteinte d'une valeur seuil de température prédéterminable dans l'appareil ménager et/ou une puissance moindre est réglée jusqu'à l'atteinte d'une valeur seuil d'humidité de l'air de processus prédéterminable.

6. Procédé selon l'une des revendications 2 à 5, **caractérisé en ce que** la tension électrique ou le courant électrique sont modifiés de façon appropriée pour la modification de l'alimentation en énergie.
